# EUROPÄISCHE PATENTSCHRIFT

(11) **EP 2 210 464 B1**
(45) Veröffentlichungstag und Bekanntmachung des Hinweises auf die Patenterteilung: **18.01.2012**
(21) Anmeldenummer: 10401010.3
(22) Anmeldetag: 19.01.2010
(51) Int. Cl.: A01C 7/04

(54) **Doppelseitiger EDX-Abstreifer mit gemeinsamer Einstelleinrichtung**
Double-sided EDX stripper with shared adjustment device
Démouleur EDX bilatéral doté d'un dispositif de réglage commun

(30) Priorität: 22.01.2009 DE 102009005662
(43) Veröffentlichungstag der Anmeldung: 28.07.2010
(73) Patentinhaber: Amazonen-Werke H. Dreyer GmbH & Co. KG, 49205 Hasbergen (DE)
(72) Erfinder: Brüggemann, Klaus, 27777 Ganderkesee (DE); Schröder, Olaf, 27798 Hude (DE)

(56) Entgegenhaltungen:
- EP-A1- 1 704 763
- DE-A1- 10 140 341
- DE-A1-102005 017 604
- US-B1- 6 516 733

## Beschreibung

Die Erfindung betrifft eine Vorrichtung zum Abstreifen von überschüssigen Samenkörnern gemäß des Oberbegriffes des Patentanspruches 1.

Eine derartige Vorrichtung ist beispielsweise in der DE 101 40 341 B4 beschrieben. Bei dieser Vorrichtung sind auf jeder Seite der in Reihen angeordneten Aussaatöffnungen Abstreifer angeordnet. Die an einer Seite der Reihe der beabstandet zueinander in Reihen angeordneten Aussaatöffnungen sind auf einer mittels eines Einstellelementes verschiebbaren Stange jeweils angeordnet. Jede dieser Stangen muss separat mit einem separaten Einstellelement eingestellt werden. Dieses ist relativ aufwendig.

Eine weitere Vorrichtung zum Abstreifen von überschüssigen Samenkörnern ist durch die US 6 516 733 B1 bekannt.

Der Erfindung liegt die Aufgabe zugrunde, eine vereinfachte zentralisierte Einstellvorrichtung für die Abstreiferelemente der beidseitig jeweils einer in Reihen angeordneten Aussaatöffnungen zu schaffen.

Diese Aufgabe wird erfindungsgemäß durch die kennzeichnenden Merkmale des Patentanspruches 1 gelöst. Infolge dieser Maßnahme werden über eine zentrale Einstelleinrichtung gleichzeitig die beidseitig die in einer Reihe angeordneten Aussaatöffnungen einer Vereinzelungstrommel eingestellt. Hierdurch werden Einstellfehler vermieden, weil es ein einziges Einstellorgan für bei einer Reihe zugeordneten Einstellelemente nur gibt. Somit ist eine einfache Voraussetzung für die Einstellung der Abstreiferelemente erreicht.

Um die Abstreiferelemente in einfacher Weise durch Verdrehen der Rundstäbe um ihre Längsachse einstellen zu können, ist vorgesehen, dass zwischen den Rundstäben und den Abstreiferelementen auf die Abstreiferelemente wirkende schräge Ebene aufweisende und/oder schraubenförmige Elemente angeordnet sind.

Eine einfache Verstellung der Abstreiferelemente durch die Rundstäbe lässt sich dadurch gekennzeichnet, dass den Rundstäben mit an den Abstreiferelementen sich befindlichen schrägen Ebenen oder schraubenförmigen Elementen zusammenwirkende Ansätze zugeordnet sind.

Um die Abstreiferelemente in einfacher Weise einstellen zu können und sicherzustellen, dass die schrägen Ebenen und schraubenförmigen Elemente mit den an den Rundstäben angeordneten Ansätzen zusammenwirken, ist vorgesehen, dass zwischen den einer Reihe von Aussaatöffnungen zugeordneten Abstreiferelementen die beiden Abstreiferelemente auseinander drückende federnde Elemente angeordnet sind. Hierdurch wird sichergestellt, dass bei einem Vergrößern des Abstandes der einander zugeordneten Abstreiferelemente diese auch sicher verstellt werden.

Eine sichere Führung der Abstreiferelemente in Bezug auf die Trommel, wird dadurch erreicht, dass die Abstreiferelemente an zwei beabstandet zueinander angeordneten Rundstäben angeordnet sind, dass die Rundstäbe parallel zur Drehachse der Trommel verlaufend angeordnet sind, wobei beiden Rundstäben mit den Abstreiferelementen zusammenwirkende Ansätze, die auf an den Abstreiferelementen sich befindlichen schrägen Ebenen und/oder schraubenförmigen Elementen einwirkend ausgebildet sind, zugeordnet sind.

Weitere Einzelheiten der Erfindung sind der Beispielsbeschreibung und den Zeichnungen zu entnehmen.

### Hierbei zeigen

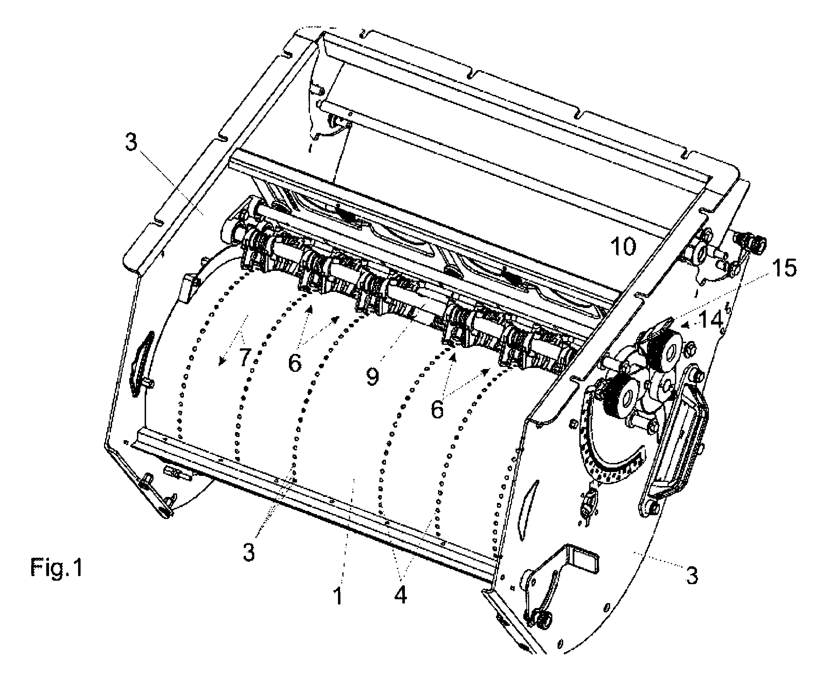

- Fig. 1: die Anordnung der Trommel einer Einzelkornsämaschine in dem Gehäuse ohne Vorratsbehälter und pneumatischer Einrichtung zur ,Erzeugung des Druckunterschiedes und der Förderluft somit den das vereinzelnte Saatgut abführenden Ausbringleitungen in perspektivischer Darstellung,

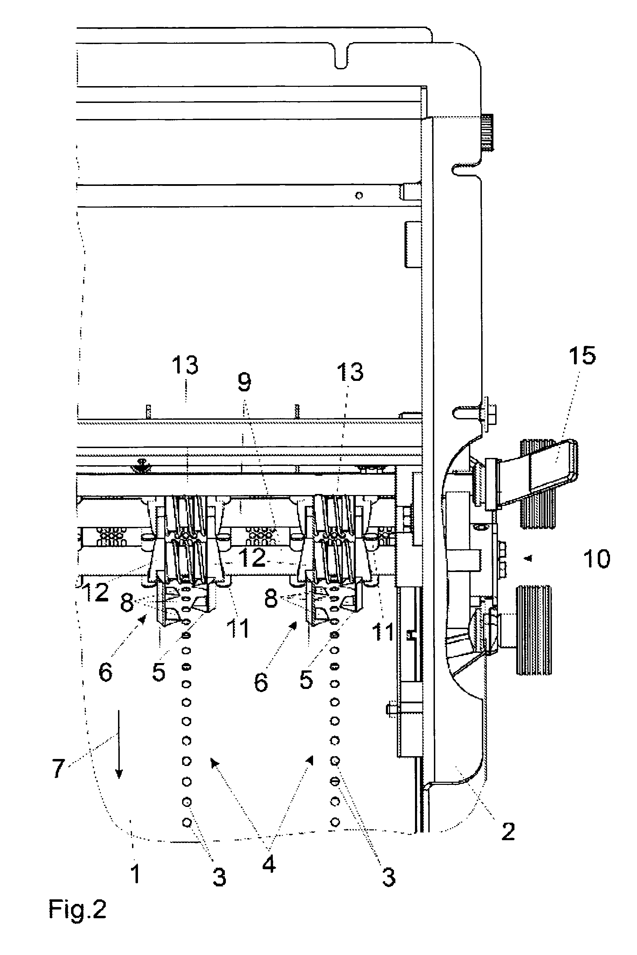

- Fig. 2: die Anordnung der Abstreiferelemente an der Trommel in dem Gehäuse der Einzelkornsämaschine in der Ansicht von hinten und vergrößertem Maßstab und
- Fig. 3: die Anordnung der Abstreiferelemente zu den in einer Reihe angeordneten Aussaatöffnungen einer Vereinzelungstrommel in der Ansicht von oben und in vergrößertem Maßstab.

Die als Vereinzlungstrommel 1 ausgebildete
Vereinzelungseinrichtung ist in dem Gehäuse 2 drehbar gelagert und rotierend angetrieben angeordnet. Der Vereinzlungstrommel 1 ist ein nicht dargestellter Vorratsbehälter und eine Luftdruckerzeugungseinrichtung, beispielsweise ein Gebläse zugeordnet. In der Trommel 1 sind die Aussaatöffnungen 3 in mehreren umlaufenden kreisförmig angeordneten Reihen 4 angeordnet, wobei die Aussaatöffnungen 3 über die Druckerzeugungseinrichtung mit einem Druckunterschied beaufschlagt werden, so dass sich die im Saatgutvorrat des Vorratsbehälters befindlichen Saatkörner aufgrund des Druckunterschiedes an den Aussaatöffnungen 3 anlagern können. Hierbei kann entweder auf der Innenseite der Trommel 1 ein Unterdruck oder auf der Außenseite der Trommel ein Überdruck erzeugt werden, so dass sich die Samenkörner auf der Außenseite der Trommel 1 an den Aussaatöffnungen 3 aufgrund des erzeugten Druckunterschiedes anlagern.

In einem Abstand zu dem Anlagerungsbereich, das heißt zu dem Bereich, in dem die Saatguttrommel 1 durch den Saatgutvorrat geführt wird, ist auf der Außenseite der Trommel 1 die mehrere Abstreiferelemente 5 aufweisende Abstreifereinrichtung 6 angeordnet. Jeder Reihe von Aussaatöffnungen 3 ist auf beiden Seiten der Aussaatöffnungen 3 ein Abstreiferelement 5 zugeordnet. Die Abstreiferelemente 5 weisen mehrere in Drehrichtung 7 der Trommel 1 hintereinander angeordnete Abstreifer 8 an der Trommel 1 mit einem zumindest annähernd anliegenden Bereich auf.

Die Abstreiferelemente 5 mit ihren Abstreifern 8 sind auf zwei in Drehrichtung der Trommel 7 beabstandeten parallel zur Drehachse der Tommel 1 angeordneten Rundstäben 9 verschiebbar angeordnet. Die Rundstäbe 9 sind in dem Gehäuse 3 um ihre Längsachse verdrehbar gelagert. Die beiden Rundstäbe 9 sind mit einer getrieblichen Zwangsverbindung 10 miteinander gekoppelt, so dass bei dem Verdrehen des einen Rundstabes 9 auch der andere Rundstab 9 in entgegengesetzter Drehrichtung verdreht wird. Im Bereich der Abstreiferelemente 5 sind an den Rundstäben mit den Abstreiferelementen 5 zusammenwirkende Ansätze 11 angeordnet. An den Abstreiferelementen 5 sind im Bereich der an den Rundstäben 9 befindlichen Ansätze 11 schräge Ebenen 12 oder schraubenförmige Elemente angeordnet, die miteinander zusammenwirken. Somit sind den Rundstäben mit den Abstreiferelementen 5 zusammenwirkende Ansätze 11, die auf an den Abstreiferelementen 5 befindlichen schrägen Ebenen 12 und/oder schraubenförmigen Elementen einwirkend ausgebildet sind, zugeordnet.

Somit sind zwischen den Rundstäben und den
Abstreiferelementen 5 auf die Abstreiferelemente 5 wirkende schräge Ebenen aufweisenden und/oder schraubenförmige Elemente 12 angeordnet. Hierbei sind den Rundstäben 9 mit an den Abstreiferelementen 5 sich befindlichen schrägen Ebenen und/oder schraubenförmigen Elementen 12 zusammenwirkende Ansätze 11 angeordnet.

Damit die schrägen Ebenen 12 und/oder schraubenförmigen Elemente der Abstreiferelemente 5 an den an den Rundstäben 9 angeordneten Ansätzen 11 immer anliegen, sind zwischen den einer Reihe 4 von Aussaatöffnungen 3 zugeordneten Abstreiferelementen 5 die beiden Abstreiferelemente 5 auseinanderdrückende federnde Elemente 13 angeordnet. Hierdurch wird immer eine genaue Einstellung der Abstreiferelemente 5 bezüglich deren Abstreifer 8 zu den einer Reihe 4 angeordneten Aussaatöffnungen 3 gewährleistet. Den Rundstäben 9 der Abstreifereinrichtung 6, auf denen die Abstreiferelemente 5 angeordnet sind, sind Einstellelemente 14 zugeordnet. Diese Einstellelemente 14 sind als zentrale Einstelleinrichtung ausgebildet und derart ausgestaltet, dass die auf beiden Seiten jeder Reihe 4 der Aussaatöffnungen 3 angeordneten Abstreiferelemente 5 gleichzeitig gemeinsam von der Einstelleinrichtung 14 verstellbar sind.

Hierzu sind im Ausführungsbeispiel jedem Rundstab 9 ein Zahnrad 10 zugeordnet. Diese Zahnräder 10 kämmen miteinander, so dass beim Verdrehen eines Rundstabes 9 und dem auf dem jeweiligen Rundstab 9 drehfest angeordneten Zahnrad sich der andere Rundstab 9 in entgegengesetzter Drehrichtung verdreht. Einem der Rundstäbe 9 ist ein Einstellhebel 15 mit einer Feststellvorrichtung zugeordnet, um in einfacher Weise die Abstreifer 8 der Abstreiferelemente 5 zu den Aussaatöffnungen 3 der in Reihen 4 angeordneten Aussaatöffnungen 3 eingestellt werden kann.

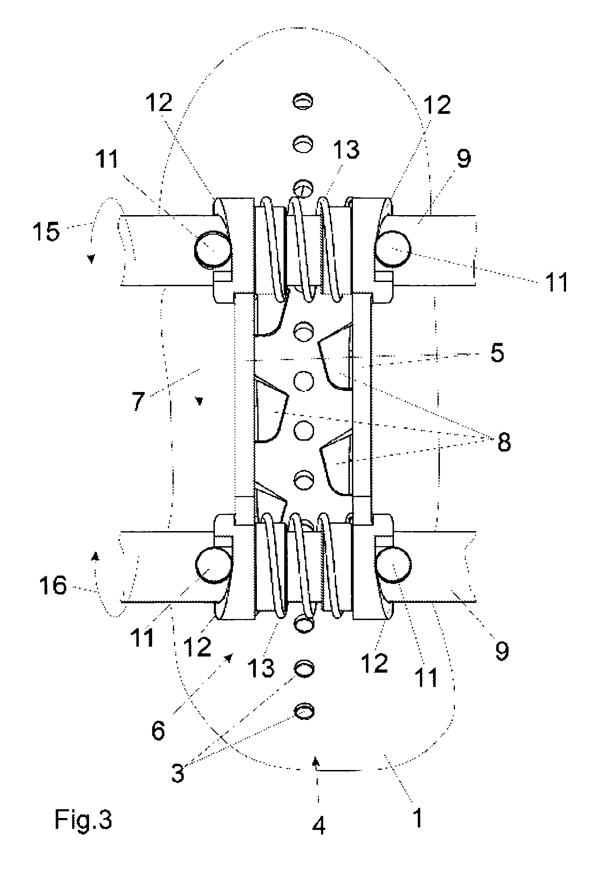

Wird die in Fig. 3 obere Welle 9 in Pfeilrichtung 15 verdreht, so wird die untere Welle 9 in Pfeilrichtung 16 entgegengesetzt verdreht, so dass der Ansatz 11 auf der schrägen oder schraubenlinienförmigen Fläche 12 verlagert wird. In diesem Fall würden die Abstreiferelemente gegen die Federkraft der Federelemente 13 zusammengedrückt werden. Dies bedeutet, dass die Abstreifer 8 näher an die in einer Reihe 4 angeordneten Austrittöffnungen 3 herangestellt werden.

Wenn über die Einstellvorrichtung 10 die Rundstäbe 9 entgegengesetzt, d.h. entgegen den Pfeilrichtung 15 und 16 verdreht werden, so wandern die Ansätze 11 entsprechend an den schrägen und schraubenlinienförmigen Elementen 12 entlang, so dass die Abstreiferelemente 5 auf den Rundstäben 9 von den federnden Elementen 13 auseinander gedrückt werden, so dass sich die Abstreifer 8 von den Aussaatöffnungen 3 entfernen.

## Patentansprüche

1. Vorrichtung zum Abstreifen von überschüssigen Samenkörnern von den in einer rotierenden Trommel (1) angebrachten und mit einem Druckunterschied beaufschlagten Aussaatöffnungen (3) einer Einzelkornsämaschine, wobei die Aussaatöffnungen (3) in mehreren beabstandet zueinander angeordneten Reihen (4) angeordnet sind, wobei jeder Reihe (4) von Aussaatöffnungen (3) beidseitig der Aussaatöffnungen (3) wirkende Abstreiferelemente (6) auf Führungselementen angeordnet sind, wobei die Abstreiferelemente (6) mittels Einstellelementen (10) gemeinsam gegenüber den Aussaatöffnungen (3) und zueinander verstellbar angeordnet sind, wobei die den Abstreiferelementen (6) zugeordneten Einstellelemente (10) als zentrale Einstelleinrichtung ausgebildet und derart ausgestaltet sind, und wobei die auf beiden Seiten jeder Reihe (4) angeordneten Abstreiferelemente (6) gleichzeitig und gemeinsam von der Einstelleinrichtung (10) verstellbar sind, **dadurch gekennzeichnet, dass** die Führungselemente als um ihre Längsachse verdrehbare Rundstäbe (9) ausgebildet sind.

2. Vorrichtung nach Anspruch 1, **dadurch gekennzeichnet, dass** zwischen den Rundstäben (9) und den Abstreiferelementen (6) auf die Abstreiferelemente (6) wirkende schräge Ebene (12) aufweisende und/oder schraubenförmige Elemente (12) angeordnet sind.

3. Vorrichtung nach Anspruch 2 , **dadurch gekennzeichnet, dass** den Rundstäben (9) mit an den Abstreiferelementen (5) sich befindlichen schrägen Ebenen (12) oder schraubenförmigen Elementen (12) zusammenwirkende Ansätze zugeordnet sind.

4. Vorrichtung nach einem oder mehreren der vorstehenden Ansprüche, **dadurch gekennzeichnet, dass** zwischen den einer Reihe (4) von Aussaatöffnungen (3) zugeordneten Abstreiferelementen (5) die beiden Abstreiferelemente (5) auseinander drückende federnde Elemente (13) angeordnet sind.

5. Vorrichtung nach einem oder mehreren der vorstehenden Ansprüche, **dadurch gekennzeichnet, dass** die Abstreiferelemente (5) an zwei beabstandet zueinander angeordneten Rundstäben (9) angeordnet sind, dass die Rundstäbe (9) parallel zur Drehachse der Trommel (1) verlaufend angeordnet sind, wobei beiden Rundstäben (9) mit den Abstreiferelementen (5) zusammenwirkende Ansätze (11), die auf an den Abstreiferelementen (6) sich befindlichen schrägen Ebenen (12) und/oder schraubenförmigen Elementen (12) einwirkend ausgebildet sind, zugeordnet sind.

## Claims

1. Apparatus for scraping off excess seeds from the seeding holes (3) of a precision seeder, which seeding holes are made in a rotating drum (1) and are subjected to a pressure difference, wherein the seeding holes (3) are disposed in a plurality of mutually spaced rows (4), wherein scraper elements (6) acting to each row (4) of seeding holes (3) on both sides of the seeding holes (3) are disposed on guide elements, wherein the scraper elements (6) are arranged so as to be jointly adjustable by means of adjusting elements (10) in relation to the seeding holes (3) and relative to one another, wherein the adjusting elements (10) assigned to the scraper elements (6) are configured as a central adjusting device and are designed in such a way, and wherein the scraper elements (6) disposed on both sides of each row (4) are simultaneously and jointly adjustable by the adjusting device (10), **characterized in that** the guide elements are configured as rods (9) which are rotatable about their longitudinal axis.

2. Apparatus according to Claim 1, **characterized in that** elements (12) which have an oblique plane (12) acting on the scraper elements (6) and/or are helical are disposed between the rods (9) and the scraper elements (6).

3. Apparatus according to Claim 2, **characterized in that** to the rods (9) are assigned lugs, which cooperate with oblique planes (12) or helical elements (12) present on the scraper elements (5).

4. Apparatus according to one or more of the preceding claims, **characterized in that** resilient elements (13) which force apart the two scraper elements (5) are disposed between the scraper elements (5) assigned to a row (4) of seeding holes (3).

5. Apparatus according to one or more of the preceding claims, **characterized in that** the scraper elements (5) are disposed on two mutually spaced rods (9), **in that** the rods (9) are arranged running parallel to the rotational axis of the drum (1), wherein to both rods (9) are assigned lugs (11) which cooperate with the scraper elements (5) and which are configured such that they act on oblique planes (12) and/or helical elements (12) present on the scraper elements (6).

## Revendications

1. Dispositif pour racler des graines de semences excédentaires d'un tambour rotatif (1), muni de perforations à graines de semences (3) dans un semoir monograine, mis en dépression,
* les perforations à graines de semences (3) étant réparties en plusieurs rangées (4) écartées les unes des autres,
* à chaque rangée (4) de perforations à graines de semences (3), de part et d'autre des perforations (3) sont associés des éléments racleurs (6) portés par des éléments de guidage,
* les éléments racleurs (6) sont portés par des éléments de réglage (10) pour être réglés par rapport aux perforations (3) les uns par rapport aux autres,
* les éléments de réglage (10) associés aux éléments racleurs (6) sont réalisés et conçus comme une installation centrale de réglage, et
* les éléments racleurs (6) prévus des deux côtés de chaque rangée (4) sont réglables simultanément et en commun par l'installation de réglage (10),
**caractérisé en ce que**,
les éléments de guidage sont réalisés sous la forme de barres rondes (9) qui peuvent tourner autour de leurs axes longitudinales.

2. Dispositif selon la revendication 1,
**caractérisé en ce que**
des plans inclinés (12) agissant sur les élément racleurs (6) et/ou des éléments hélicoïdaux (12) sont prévus entre les barres rondes (9) et les éléments racleurs (6).

3. Dispositif selon la revendication 2,
**caractérisé en ce qu'**
des prolongements coopérant avec les plans inclinés (12) des éléments racleurs (5) ou avec des éléments hélicoïdaux (12) sont associés aux barres rondes (9).

4. Dispositif selon l'une ou plusieurs des revendications précédentes, **caractérisé en ce qu'**
entre les éléments racleurs (5) associés à une rangée (4) de perforations (3), les deux éléments racleurs (5) comportent des éléments à ressort (13) qui écartent les éléments racleurs (5).

5. Dispositif selon l'une ou plusieurs des revendications précédentes, **caractérisé en ce que**
les éléments racleurs (5) sont portés par deux barres rondes (9) écartées l'une de l'autre :
* les barres rondes (9) sont installées de manière parallèle à l'axe de rotation du tambour (1),
* les deux barres rondes (9) avec les prolongements (11) coopérant avec les éléments de raclage (5), sont réalisées de façon à coopérer avec les plans inclinés (12) prévus sur les éléments racleurs (6) et/ou les éléments hélicoïdaux (12) .
